# EUROPÄISCHE PATENTSCHRIFT

(11) **EP 2 057 054 B1**
(45) Veröffentlichungstag und Bekanntmachung des Hinweises auf die Patenterteilung: **23.05.2012**
(21) Anmeldenummer: 07729615.0
(22) Anmeldetag: 29.05.2007
(51) Int. Cl.: B60W 40/10, B60W 50/02

(54) **VERFAHREN UND VORRICHTUNG ZUM ERMITTELN EINER AKTUELLEN FAHRZEUGLÄNGSGESCHWINDIGKEIT**
METHOD AND APPARATUS FOR DETERMINING THE CURRENT LONGITUDINAL VEHICLE SPEED
PROCÉDÉ ET DISPOSITIF POUR DÉTERMINER UNE VITESSE LONGITUDINALE ACTUELLE D'UN VÉHICULE

(30) Priorität: 21.08.2006 DE 102006039153
(43) Veröffentlichungstag der Anmeldung: 13.05.2009
(73) Patentinhaber: Continental Automotive GmbH, 30165 Hannover (DE)
(72) Erfinder: ABELE, Andreas, 93092 Barbing (DE); KRETSCHMANN, Matthias, 93047 Regensburg (DE)
(86) Internationale Anmeldenummer: PCT/EP2007/055193
(87) Internationale Veröffentlichungsnummer: WO 2008/022818

(56) Entgegenhaltungen:
- EP-A- 0 322 911
- DE-A1- 19 735 562
- DE-A1- 19 939 979
- US-A- 4 989 923
- US-A- 6 158 274
- US-B1- 6 560 539

## Beschreibung

Die vorliegende Erfindung betrifft ein Verfahren zum Ermitteln einer aktuellen Fahrzeuglängsgeschwindigkeit gemäß dem Oberbegriff des Patentanspruchs 1. Außerdem betrifft die vorliegende Erfindung eine entsprechende Vorrichtung zum Ermitteln einer aktuellen Fahrzeuglängsgeschwindigkeit gemäß dem Oberbegriff des Patentanspruchs 8.

In Kraftfahrzeugen kommen in zunehmenden Maße Fahrdynamikalgorithmen zum Einsatz. Abhängig von Sensorsignalen wird ein aktueller Bewegungszustand eines Kraftfahrzeugs ermittelt. Gegebenenfalls werden Stellgrößen zum Ansteuern von Aktoren erzeugt, zum Beispiel zum Ansteuern von Bremsen des Kraftfahrzeugs, um unerwünschten Bewegungszuständen des Kraftfahrzeugs entgegen zu wirken. Eine wesentliche Größe in Bezug auf den aktuellen Bewegungszustand des Kraftfahrzeugs ist die aktuelle Fahrzeuglängsgeschwindigkeit.

Aus der DE 199 39 979 A1 ist ein Verfahren bekannt, bei dem von mindestens zwei Rädern eines Fahrzeugs jeweils eine Raddrehzahl ermittelt wird. Bei dem vorbekannten Verfahren wird in Abhängigkeit von den Raddrehzahlen ein gleitendes Variabilitätsmaß ermittelt, wobei eine aktuelle Zuverlässigkeit der Raddrehzahlen bestimmt wird. Außerdem wird bei dem vorbekannten Verfahren die aktuelle Fahrzeuglängsgeschwindigkeit abhängig von den aktuell als zuverlässig erkannten Raddrehzahlen ermittelt oder die aktuelle Fahrzeuglängsgeschwindigkeit wird als eine Extrapolation abhängig von zuvor als zuverlässig erkannten Raddrehzahlen ermittelt, falls aktuell alle Raddrehzahlen als unzuverlässig erkannt wurden. Die DE 199 39 979 A1 offenbart außerdem eine Vorrichtung zur Durchführung des Verfahrens und ist als nächstliegender Stand der Technik nach dem Oberbegriff des Anspruchs 1 zu sehen.

Die Aufgabe der Erfindung ist, ein vereinfachtes und zuverlässiges Verfahren sowie eine vereinfachte und zuverlässige Vorrichtung zum Ermitteln einer aktuellen Fahrzeuglängsgeschwindigkeit zu schaffen.

Die Aufgabe wird gelöst durch die Merkmale der unabhängigen Patentansprüche. Vorteilhafte Weiterbildungen der Erfindung sind in den Unteransprüchen gekennzeichnet.

Die Erfindung zeichnet sich aus durch ein Verfahren und eine entsprechende Vorrichtung zum Ermitteln einer aktuellen Fahrzeuglängsgeschwindigkeit. Das erfindungsgemäße Verfahren sieht vor, dass für jede Raddrehzahl jeweils die Radbeschleunigung ermittelt wird, und dass ein Stillstand des Fahrzeugs erkannt wird, wenn alle Radbeschleunigungen gleich Null sind. Für das Ermitteln der aktuellen Fahrzeuglängsgeschwindigkeit bei einem Wechsel von einem erkannten Stillstand zu einer Bewegung des Fahrzeugs wird erfindungsgemäß für eine vorgegebene Zeitdauer diejenige Raddrehzahl aus den als aktuell zuverlässig erkannten Raddrehzahlen ausgewählt, die den geringsten Betrag aufweist.

Der Vorteil ist, dass sich dadurch ein gegebenenfalls erhöhter Schlupf beim Beschleunigen des Fahrzeugs nicht negativ auf die Ermittlung der aktuellen Fahrzeuglängsgeschwindigkeit auswirkt. Die ermittelte aktuelle Fahrzeuglängsgeschwindigkeit ist dadurch besonders präzise und zuverlässig.

Die aktuelle Fahrzeuglängsgeschwindigkeit ist abhängig von den Raddrehzahlen zuverlässig ermittelbar ist. Außer den Raddrehzahlen sind keine weiteren Informationen von Sensoren für das Ermitteln der Fahrzeuglängsgeschwindigkeit erforderlich. Das Ermitteln der Zuverlässigkeit der jeweiligen Raddrehzahl erfolgt durch Auswertung des Variabilitätsmaßes, das eine Variabilität eines zeitlichen Verlaufs der jeweiligen Raddrehzahl repräsentiert. Ferner ist die aktuelle Fahrzeuglängsgeschwindigkeit unabhängig von einem Antriebskonzept des Fahrzeugs ermittelbar, das heißt unabhängig davon, ob das Fahrzeug Frontantrieb, Heckantrieb oder Allradantrieb aufweist. Es müssen somit keine Annahmen darüber getroffen werden, welche der mindestens zwei Raddrehzahlen grundsätzlich für das zuverlässige Ermitteln der Fahrzeuglängsgeschwindigkeit geeignet ist. Die Raddrehzahlen aller Räder des Fahrzeugs können unabhängig vom Antriebskonzept berücksichtigt werden. Dadurch sind das Verfahren und die Vorrichtung einfach für unterschiedliche Fahrzeugtypen mit unterschiedlichem Antriebskonzept nutzbar.

In einer vorteilhaften Ausgestaltung ist das Variabilitätsmaß durch eine Varianz oder Standardabweichung gebildet. Dies ist besonders einfach.

In einer weiteren vorteilhaften Ausgestaltung wird für jede Raddrehzahl jeweils eine Radbeschleunigung abhängig von der jeweiligen Raddrehzahl ermittelt. Die aktuelle Zuverlässigkeit der jeweiligen Raddrehzahl wird abhängig von der jeweiligen Radbeschleunigung ermittelt. Dies hat den Vorteil, dass die Zuverlässigkeit und somit die aktuelle Fahrzeuglängsgeschwindigkeit besonders zuverlässig und präzise ermittelt werden kann.

In diesem Zusammenhang ist es vorteilhaft, wenn die jeweilige Raddrehzahl aktuell als zuverlässig erkannt wird, wenn das Variabilitätsmaß kleiner ist als ein vorgegebener Variabilitätsschwellenwert und die jeweilige Radbeschleunigung größer ist als ein vorgegebener unterer Radbeschleunigungsschwellenwert und kleiner ist als ein vorgegebener oberer Radbeschleunigungsschwellenwert. Das Ermitteln der Fahrzeuglängsgeschwindigkeit kann so besonders einfach und zuverlässig erfolgen.

In einer weiteren vorteilhaften Ausgestaltung wird die aktuelle Fahrzeuglängsgeschwindigkeit abhängig von einem Mittelwert der aktuell als zuverlässig erkannten und gegebenenfalls ausgewählten Raddrehzahlen ermittelt. Dies ist besonders einfach.

In einer weiteren vorteilhaften Ausgestaltung wird für jede Raddrehzahl jeweils die Radbeschleunigung ermittelt. Der Stillstand des Fahrzeugs wird erkannt, wenn alle Radbeschleunigungen gleich Null sind. Eine minimale Raddrehzahl wird bei einem Wechsel von einer Bewegung des Fahrzeugs zum Stillstand des Fahrzeugs abhängig von den zuvor als zuverlässig erkannten und gegebenenfalls ausgewählten Raddrehzahlen ermittelt. Die aktuelle Fahrzeuglängsgeschwindigkeit wird nach unten durch eine durch die minimale Raddrehzahl vorgegebene Fahrzeuglängsgeschwindigkeit begrenzt t. Der Vorteil ist, dass die minimale Raddrehzahl dadurch einfach und zuverlässig automatisch ermittelbar ist. Dies ist insbesondere vorteilhaft, wenn Raddrehzahlsensoren des Fahrzeugs bauartbedingt keine beliebig kleinen Raddrehzahlen erfassen können, insbesondere auch keine Raddrehzahl Null. Durch das automatische Ermitteln der minimalen Raddrehzahl muss diese nicht vorgegeben werden.

In einer weiteren vorteilhaften Ausgestaltung wird die aktuelle Fahrzeuglängsgeschwindigkeit durch einen Filter geglättet bereitgestellt. Der Vorteil ist, dass durch das Glätten die ermittelte Fahrzeuglängsgeschwindigkeit besser einer tatsächlichen Fahrzeuglängsgeschwindigkeit des Fahrzeugs entspricht. Aufgrund wechselnder aktueller Zuverlässigkeit der Raddrehzahlen wird die Fahrzeuglängsgeschwindigkeit gegebenenfalls auf Basis unterschiedlicher Kombinationen von Raddrehzahlen ermittelt. Dies kann zu Sprüngen führen, die durch das Glätten einfach verringert werden können.

Ausführungsbeispiele der Erfindung sind im Folgenden anhand der schematischen Zeichnungen erläutert. Es zeigen:

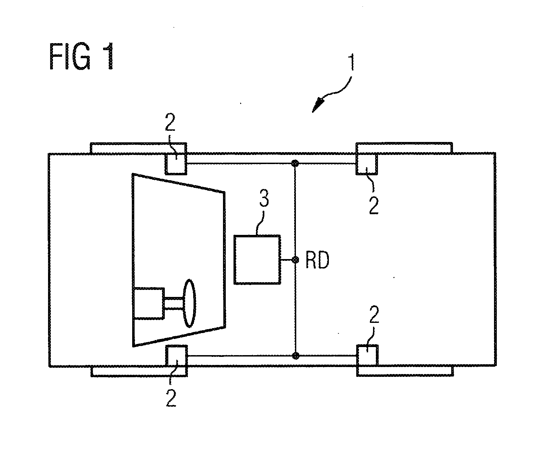

- Fig. 1: ein Fahrzeug mit Raddrehzahlsensoren und
- Fig. 2: ein Blockdiagramm.

Elemente gleicher Konstruktion oder Funktion sind figuren-übergreifend mit den gleichen Bezugszeichen versehen.

Ein Fahrzeug 1 weist an jedem Rad einen Raddrehzahlsensor 2 auf. Die Raddrehzahlsensoren 2 sind mit einer Auswertevorrichtung 3 gekoppelt. Abhängig von einem Messsignal des jeweiligen Raddrehzahlsensors 2 wird für jedes Rad eine Raddrehzahl RD als ein zeitlich veränderliches Signal ermittelt.

Die jeweilige Raddrehzahl RD wird entweder im jeweiligen Raddrehzahlsensor 2 ermittelt und der Auswertevorrichtung 3 zugeführt oder in der Auswertevorrichtung 3 aus dem Messsignal des jeweiligen Raddrehzahlsensors 2 ermittelt, das der Auswertevorrichtung 3 zugeführt wird. Die Auswertevorrichtung 3 kann auch als eine Vorrichtung zum Ermitteln einer aktuellen Fahrzeuglängsgeschwindigkeit bezeichnet werden.

Beispielsweise umfassen die Räder jeweils ein Geberrad mit Zähnen, das gemeinsam mit dem jeweiligen Rad rotiert. Die Raddrehzahlsensoren 2 sind beispielsweise ausgebildet, die Rotation des Geberrads zu erfassen und das Messsignal abhängig von einem Wechsel zwischen Zahn und Zahnlücke und einem Wechsel zwischen Zahnlücke und Zahn zu erzeugen. Durch Zählen dieser Wechsel innerhalb einer vorgegebenen Ermittlungszeitdauer kann die Raddrehzahl RD des jeweiligen Rades des Fahrzeugs 1 ermittelt werden. Die Raddrehzahlsensoren 2 können jedoch auch anders ausgebildet sein. Die Raddrehzahl RD kann auch als Radgeschwindigkeit bezeichnet werden kann.

Bei dieser Art der Ermittlung der jeweiligen Raddrehzahl RD sind sehr kleine Raddrehzahlen RD nicht ermittelbar. Bei sehr kleinen Raddrehzahlen RD ist eine Zeitdauer zwischen zwei Wechseln länger als die vorgegebene Ermittlungszeitdauer. Dadurch können nicht beliebig kleine Raddrehzahlen RD erfasst werden. Insbesondere kann keine Raddrehzahl RD von Null ermittelt werden.

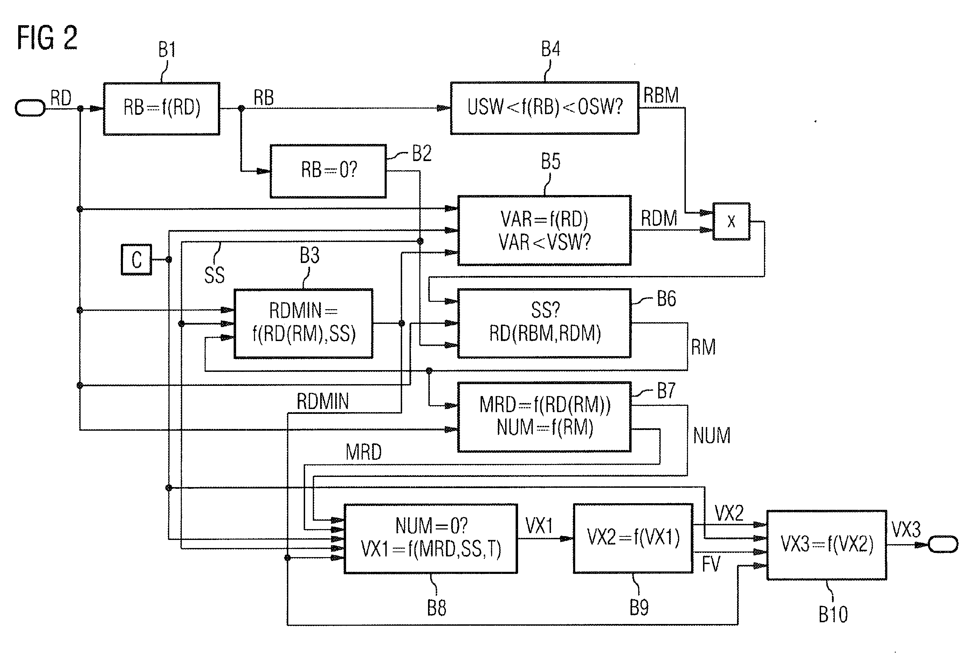

Fig. 2 zeigt ein Blockdiagram eines Verfahrens zum Ermitteln der aktuellen Fahrzeuglängsgeschwindigkeit abhängig von den Raddrehzahlen RD. Das Verfahren ist beispielsweise als ein Programm in der Auswertevorrichtung 3 implementiert, das von dieser ausführbar ist. Im Blockdiagram werden die Raddrehzahlen RD als ein Vektor interpretiert, der als Elemente die Raddrehzahlen RD der einzelnen Räder des Fahrzeugs 1 umfasst. Dieser Vektor der Raddrehzahlen RD bildet eine Eingangsgröße im Blockdiagram.

Die Raddrehzahlen RD werden einem Block B1 zugeführt. Im Block B1 wird eine Radbeschleunigung RB abhängig von den Raddrehzahlen RD ermittelt. Dazu wird beispielsweise jeweils ein Differenzenquotient aus zeitlich aufeinander folgenden Raddrehzahlwerten der jeweiligen Raddrehzahl RD gebildet. Die für die jeweiligen Räder ermittelten Radbeschleunigungen RB bilden vorzugsweise einen Vektor, dessen Elemente durch die jeweiligen Radbeschleunigungen RB aller Räder des Fahrzeugs 1 gebildet ist.

Die Radbeschleunigungen RB werden einem zweiten Block B2 zugeführt. Im zweiten Block B2 wird eine Stillstanderkennung durchgeführt. Ein Stillstand SS des Fahrzeugs 1 wird beispielsweise erkannt, wenn die Radbeschleunigung RB für alle Räder des Fahrzeugs 1 gleich Null ist. Andernfalls wird davon ausgegangen, dass das Fahrzeug 1 in Bewegung ist.

In einem Block B3 wird eine minimale Raddrehzahl RDMIN abhängig von den Raddrehzahlen RD und dem Stillstand SS ermittelt. Bei einem Wechsel von einer Bewegung des Fahrzeugs 1 zum Stillstand SS des Fahrzeugs 1 wird die minimale Raddrehzahl RDMIN beispielsweise abhängig von den Raddrehzahlen RD ermittelt, die unmittelbar vor dem Wechsel zum Stillstand SS ermittelt wurden. Durch den Block B3 kann so die minimale Raddrehzahl RDMIN automatisch ermittelt werden, so dass diese nicht vorgegeben werden muss.

Werden die Raddrehzahlen RD beispielsweise wie oben beschrieben durch Auswerten der Wechsel zwischen Zähnen und Zahnlücken des jeweiligen Geberrads ermittelt und sind dadurch keine beliebig kleinen Raddrehzahlen RD ermittelbar, dann ist eine Fahrzeuglängsgeschwindigkeit von beispielsweise Null physikalisch nicht durch die Messsignale der Raddrehzahlsensoren 2 gestützt. Die ermittelte minimale Raddrehzahl RDMIN kann dazu genutzt werden, die durch das Verfahren ermittelte Fahrzeuglängsgeschwindigkeit nach unten zu begrenzen und dadurch sicherzustellen, dass die ermittelte Fahrzeuglängsgeschwindigkeit physikalisch in Übereinstimmung ist mit den ermittelten Raddrehzahlen RD.

Die Radbeschleunigungen RB werden auch einem vierten Block B4 zugeführt. Die zu der jeweiligen Radbeschleunigung RB zugehörige Raddrehzahl RD wird im Block B4 als unzuverlässig erkannt, wenn eine der jeweiligen Radbeschleunigung RB entsprechende Fahrzeugbeschleunigung einen vorgegebenen, physikalisch sinnvollen Wertebereich verlässt. Beispielsweise wird die jeweilige Raddrehzahl RD als unzuverlässig erkannt, wenn die jeweils zugehörige Radbeschleunigung RB kleiner oder gleich einem vorgegebenen unteren Radbeschleunigungsschwellenwert USW ist oder größer oder gleich einem vorgegebenen oberen Radbeschleunigungsschwellenwert OSW ist. Beispielsweise entspricht der vorgegebene untere Radbeschleunigungsschwellenwert USW einer Fahrzeugbeschleunigung von -1,5 g und der vorgegebene obere Radbeschleunigungsschwellenwert OSW einer Fahrzeugbeschleunigung von +2 g, wobei g für eine Erdbeschleunigung von etwa 9,81 m/s² steht. Der vorgegebene untere Radbeschleunigungsschwellenwert USW und der vorgegebene obere Radbeschleunigungsschwellenwert OSW können jedoch auch anders vorgegeben sein.

Ausgangsseitig wird am Block B4 ein Radbeschleunigungsmerker RBM bereitgestellt, der die Zuverlässigkeit der jeweiligen Raddrehzahl RD in Bezug auf die Radbeschleunigung RB repräsentiert. Beispielsweise ist der Radbeschleunigungsmerker RBM ein Vektor, der für jede im Block B4 als zuverlässig erkannte Raddrehzahl RD eine Eins als Element aufweist und für jede im Block B4 als unzuverlässig erkannte Raddrehzahl RD eine Null als Element aufweist. Der Radbeschleunigungsmerker RBM kann jedoch auch anders gebildet sein.

Die Raddrehzahlen RD werden ferner in einem Block B5 auf ihre Zuverlässigkeit überprüft. Dazu wird für jede Raddrehzahl RD ein zeitlich gleitendes Variabilitätsmaß VAR ermittelt. Das Variabilitätsmaß VAR ist beispielsweise durch eine Varianz oder eine Standardabweichung gebildet. Bevorzugt wird das Variabilitätsmaß VAR nur dann ermittelt, wenn ein Betrag der jeweiligen Raddrehzahl RD größer als die minimale Raddrehzahl RDMIN ist. Falls alle Raddrehzahlen RD unter einem vorgegebenen Raddrehzahlschwellenwert liegen, dann wird vorzugsweise nur die kleinste Raddrehzahl RD als zuverlässig erkannt.

Die jeweilige Raddrehzahl RD wird als unzuverlässig erkannt, wenn das zugehörige Variabilitätsmaß VAR größer oder gleich einem vorgegebenen Variabilitätsschwellenwert VSW ist, und wird als zuverlässig erkannt, wenn das Variabilitätsmaß VAR kleiner als der vorgegebene Variabilitätsschwellenwert VSW ist. Dem Radbeschleunigungsmerker entsprechend RBM wird durch den Block B5 ein Raddrehzahlmerker RDM bereitgestellt, der die Zuverlässigkeit der jeweiligen Raddrehzahl RD in Bezug auf das Variabilitätsmaß VAR repräsentiert.

Der Radbeschleunigungsmerker RBM und der Raddrehzahlmerker RDM werden miteinander, zum Beispiel durch eine Multiplikation verknüpft, und einem Block B6 zugeführt. Im Block B6 wird überprüft, ob ein Wechsel vom Stillstand SS zu der Bewegung des Fahrzeugs 1 vorliegt. Liegt dieser Wechsel vor, dann wird davon ausgegangen, dass das Fahrzeug 1 beschleunigt. Beim Beschleunigen tritt jedoch häufig ein erhöhter Schlupf an den angetriebenen Rädern des Fahrzeugs 1 auf. Beispielsweise ist durch den Schlupf die jeweilige Raddrehzahl RD an diesen Rädern gegebenenfalls größer, als sie in Bezug auf eine tatsächliche Fahrzeuglängsgeschwindigkeit des Fahrzeugs 1 sein dürfte.

Aus diesem Grund wird für eine vorgegebene Zeitdauer, zum Beispiel für wenige Sekunden, nach dem Wechsel vom Stillstand SS zur Bewegung des Fahrzeugs 1 nur diejenige Raddrehzahl RD aus den als zuverlässig erkannten Raddrehzahlen RD ausgewählt, die aktuell am kleinsten ist. Entsprechend dem Radbeschleunigungsmerker RBM und dem Raddrehzahlmerker RDM ist diese Raddrehzahl RD in einem Radmerker RM repräsentiert, der ausgangsseitig des Blocks B6 bereitgestellt wird. Beispielsweise weist nur das zur ausgewählten Raddrehzahl RD gehörige Element des Vektors eine Eins auf und alle anderen Elemente des Vektors weisen eine Null auf. Nach Ablauf der vorgegebenen Zeitdauer entspricht der Radmerker RM bevorzugt der Verknüpfung des Radbeschleunigungsmerkers RBM und des Raddrehzahlmerkers RDM.

Der Radmerker RM wird auch dem Block B3 zugeführt. Vorzugsweise wird die minimale Raddrehzahl RDMIN nur aus den zuvor als zuverlässig erkannten und gegebenenfalls ausgewählten Raddrehzahlen RD, zum Beispiel durch Mittelwertbildung dieser Raddrehzahlen RD ermittelt. Dadurch kann die minimale Raddrehzahl RDMIN besonders zuverlässig und präzise ermittelt werden.

In einem Block B7 wird eine mittlere Raddrehzahl MRD abhängig von den als zuverlässig erkannten Raddrehzahlen RD oder der gegebenenfalls ausgewählten Raddrehzahl RD entsprechend dem Radmerker RM ermittelt. Die mittlere Raddrehzahl MRD wird beispielsweise als arithmetisches Mittel aus den durch den Radmerker RM als zuverlässig oder ausgewählt markierten Raddrehzahlen RD ermittelt. Ferner wird eine Anzahl NUM genutzter Raddrehzahlen RD abhängig von dem Radmerker RM ermittelt. Die Anzahl NUM genutzter Raddrehzahlen RD wird beispielsweise als Summe über alle Elemente des Radmerkers RM ermittelt. Ist die Anzahl NUM genutzter Raddrehzahlen RD gleich Null, das heißt es kann aktuell keine mittlere Raddrehzahl MRD ermittelt werden, dann wird bevorzugt die unmittelbar zuvor ermittelte mittlere Raddrehzahl MRD ausgangsseitig des Blocks B7 weiterhin bereitgestellt.

Die mittlere Raddrehzahl MRD und die Anzahl NUM genutzter Raddrehzahlen RD werden einem Block B8 zugeführt. Im Block B8 wird eine erste Geschwindigkeit VX1 ermittelt und ausgangsseitig des Blocks B8 bereitgestellt. Ist die Anzahl NUM genutzter Raddrehzahlen RD größer oder gleich Eins, dann wird die erste Geschwindigkeit VX1.abhängig von der ermittelten mittleren Raddrehzahl MRD, zum Beispiel durch Multiplikation mit einem vorgegebenen Radumfang ermittelt.

Ist die Anzahl NUM genutzter Raddrehzahlen RD jedoch gleich Null, dann wird die erste Geschwindigkeit VX1 als Extrapolation abhängig von zuvor als zuverlässig erkannten Raddrehzahlen RD und einer Zeit T ermittelt. Bevorzugt wird ein weiterer Verlauf der ersten Geschwindigkeit VX1 durch eine Reihenentwicklung approximiert. Bevorzugt werden bei der Reihenentwicklung die zuvor aus der mittleren Raddrehzahl MRD ermittelte erste Geschwindigkeit VX1, eine zuvor aus dieser ermittelte Fahrzeugbeschleunigung und eine zeitliche Ableitung dieser Fahrzeugbeschleunigung, zum Beispiel durch Bilden eines weiteren Differenzenquotienten berücksichtigt. Es kann jedoch ebenso eine lineare Extrapolation anstatt der Reihenentwicklung durchgeführt werden.

Vorzugsweise werden ein zuvor ermittelter Verlauf der ersten Geschwindigkeit VX1, der aus der mittleren Raddrehzahl MRD ermittelt wurde, und ein daraus ermittelter Verlauf der Fahrzeugbeschleunigung jeweils durch Filtern geglättet. Dadurch kann eine Differenzierbarkeit dieser Verläufe sichergestellt werden. Ferner wird bevorzugt ein Fehler korrigiert, insbesondere ein Amplitudenversatz, der dadurch verursacht werden kann, dass durch das Filtern eine zeitliche Verschiebung zwischen dem jeweiligen geglätteten und ungeglätteten Verlauf entsteht. Dazu wird beispielsweise zu Beginn der Extrapolation eine Differenz ermittelt aus einem letzten Wert des geglätteten Verlaufs der ersten Geschwindigkeit VX1 und einem letzten Wert des ungeglätteten Verlaufs der ersten Geschwindigkeit VX1. Diese Differenz bildet den Amplitudenversatz, der für nachfolgend extrapolierte Werte der ersten Geschwindigkeit VX1 zum Beispiel durch Subtraktion des Amplitudenversatzes berücksichtigt wird.

Beim Wechsel von der Bewegung des Fahrzeugs 1 zum Stillstand SS wird vorzugsweise ein unmittelbar zuvor ermittelter Wert der Fahrzeugbeschleunigung gespeichert. Aus diesem Wert kann eine Größe abgeleitet werden, die einen aktuellen Reibkoeffizienten der Räder auf einer aktuellen Fahrbahn repräsentiert. Wird beispielsweise auf einer Eisfläche gebremst, so dass die Räder blockieren, das heißt der Stillstand SS erkannt wird, dann entspricht der unmittelbar zuvor ermittelte Wert der Fahrzeugbeschleunigung einer maximal möglichen Beschleunigung auf der Eisfläche. Unter der Annahme, dass der aktuelle Reibkoeffizient im weiteren Verlauf der Fahrbahn im Wesentlichen unverändert bleibt während die erste Geschwindigkeit VX1 durch die Extrapolation ermittelt wird, kann diese maximal mögliche Beschleunigung für die Extrapolation genutzt werden, beispielsweise durch entsprechendes Begrenzen eines Wertebereichs der Fahrzeugbeschleunigung.

Die erste Geschwindigkeit VX1 wird einem Block B9 zugeführt, in dem die erste Geschwindigkeit VX1 durch Filtern geglättet wird. Die erste Geschwindigkeit VX1 wird insbesondere durch einen Tiefpassfilter geglättet. Durch das Glätten können Sprünge im Verlauf der ersten Geschwindigkeit VX1 reduziert werden, die beispielsweise durch Änderungen der genutzten Raddrehzahlen RD entsprechend dem Radmerker RM entstehen können. Dies führt zu einer geänderten Berechnungsgrundlage für das Ermitteln der mittleren Raddrehzahl MRD. Die im Block B9 gefilterte erste Geschwindigkeit VX1 wird als eine zweite Geschwindigkeit VX2 ausgangsseitig des Blocks B9 bereitgestellt. Ferner wird eine Filterverzögerung FV des Filters ausgangsseitig des Blocks B9 bereitgestellt. Die Filterverzögerung FV repräsentiert einen Phasenverzug, der durch das Filtern zwischen der ersten Geschwindigkeit VX1 und der zweiten Geschwindigkeit VX2 entsteht.

In einem Block B10, dem die zweite Geschwindigkeit VX2 und die Filterverzögerung FV zugeführt werden, wird dieser Phasenverzug korrigiert. Ferner wird dem Block B10 die minimale Raddrehzahl RDMIN zugeführt. Eine ausgangsseitig des Blocks B10 bereitgestellte dritte Geschwindigkeit VX3, die die aktuelle Fahrzeuglängsgeschwindigkeit repräsentiert, wird bevorzugt nach unten durch eine der minimalen Raddrehzahl RDMIN entsprechenden Fahrzeuglängsgeschwindigkeit begrenzt. Dadurch ist sichergestellt, dass die dritte Geschwindigkeit VX3 nur solche aktuelle Fahrzeuglängsgeschwindigkeiten repräsentiert, die durch die Raddrehzahlen RD physikalisch gestützt sind.

Eine Konstante C kann vorgesehen sein, die ein Zeitintervall zwischen zwei Abtastwerten der jeweiligen Raddrehzahl RD repräsentiert. Die Konstante C wird beispielsweise dem Block B5, dem Block B8 und dem Block B10 zugeführt. Die Konstante C ist entsprechend den Gegebenheiten im jeweiligen Fahrzeug vorgebbar.

Die aktuelle Fahrzeuglängsgeschwindigkeit ist auch anders ermittelbar. Beispielsweise sind im Wesentlichen nur der Block B5 zum Ermitteln der Zuverlässigkeit der Raddrehzahlen RD, der Block B7 zum Ermitteln der mittleren Raddrehzahl MRD und der Anzahl NUM der genutzten Raddrehzahlen RD abhängig von den Raddrehzahlen RD und dem Raddrehzahlmerker RDM und der Block B8 zum Ermitteln der ersten Geschwindigkeit VX1 vorgesehen, die dann die aktuelle Fahrzeuglängsgeschwindigkeit repräsentiert. Die weiteren Blöcke können nach Bedarf zusätzlich vorgesehen sein, um die aktuelle Fahrzeuglängsgeschwindigkeit noch zuverlässiger ermitteln zu können. Die minimale Raddrehzahl RDMIN wird beispielsweise nur dann benötigt, wenn die Raddrehzahlsensoren 2 keine beliebig kleinen Raddrehzahlen RD erfassen können. Alternativ zum Block B3 kann in diesem Fall die minimale Raddrehzahl RDMIN auch als eine weitere Konstante vorgegeben sein.

## Patentansprüche

1. Verfahren zum Ermitteln einer aktuellen Fahrzeuglängsgeschwindigkeit, bei dem
- von mindestens zwei Rädern eines Fahrzeugs (1) jeweils eine Raddrehzahl (RD) ermittelt wird,
- für jede Raddrehzahl (RD) jeweils ein gleitendes Variabilitätsmaß (VAR) ermittelt wird,
- eine aktuelle Zuverlässigkeit der jeweiligen Raddrehzahl (RD) ermittelt wird abhängig von dem Variabilitätsmaß (VAR) und
- die aktuelle Fahrzeuglängsgeschwindigkeit ermittelt wird entweder abhängig von den aktuell als zuverlässig erkannten Raddrehzahlen (RD) oder die aktuelle Fahrzeuglängsgeschwindigkeit ermittelt wird als eine Extrapolation abhängig von zuvor als zuverlässig erkannten Raddrehzahlen (RD), falls aktuell alle Raddrehzahlen (RD) als unzuverlässig erkannt sind, **dadurch gekennzeichnet, dass**
- für jede Raddrehzahl (RD) jeweils die Radbeschleunigung (RB) ermittelt wird,
- ein Stillstand (SS) des Fahrzeugs (1) erkannt wird, wenn alle Radbeschleunigungen (RB) gleich Null sind, und
- für das Ermitteln der aktuellen Fahrzeuglängsgeschwindigkeit bei einem Wechsel von einem erkannten Stillstand (SS) zu einer Bewegung des Fahrzeugs (1) für eine vorgegebene Zeitdauer diejenige Raddrehzahl (RD) aus den als aktuell zuverlässig erkannten Raddrehzahlen (RD) ausgewählt wird, die den geringsten Betrag aufweist.

2. Verfahren nach Anspruch 1, bei dem das Variabilitätsmaß (VAR) durch eine Varianz oder Standardabweichung gebildet ist.

3. Verfahren nach einem der vorstehenden Ansprüche, bei dem
- für jede Raddrehzahl (RD) jeweils eine Radbeschleunigung (RB) abhängig von der jeweiligen Raddrehzahl (RD) ermittelt wird und
- die aktuelle Zuverlässigkeit der jeweiligen Raddrehzahl (RD) abhängig von der jeweiligen Radbeschleunigung (RB) ermittelt wird.

4. Verfahren nach Anspruch 3, bei dem die jeweilige Raddrehzahl (RD) aktuell als zuverlässig erkannt wird, wenn das Variabilitätsmaß (VAR) kleiner ist als ein vorgegebener Variabilitätsschwellenwert (VSW) und die jeweilige Radbeschleunigung größer als ein vorgegebener unterer Radbeschleunigungsschwellenwert (USW) ist und kleiner als ein vorgegebener oberer Radbeschleunigungsschwellenwert (OSW) ist.

5. Verfahren nach einem der vorstehenden Ansprüche, bei dem die aktuelle Fahrzeuglängsgeschwindigkeit abhängig von einem Mittelwert der aktuell als zuverlässig erkannten und gegebenenfalls ausgewählten Raddrehzahlen (RD) ermittelt wird.

6. Verfahren nach einem der vorstehenden Ansprüche, bei dem
- für jede Raddrehzahl (RD) jeweils die Radbeschleunigung (RB) ermittelt wird,
- der Stillstand (SS) des Fahrzeugs (1) erkannt wird, wenn alle Radbeschleunigungen (RB) gleich Null sind,
- eine minimale Raddrehzahl (RDMIN) ermittelt wird bei einem Wechsel von einer Bewegung des Fahrzeugs (1) zu dem Stillstand (SS) des Fahrzeugs (1) abhängig von den zuvor als zuverlässig erkannten und gegebenenfalls ausgewählten Raddrehzahlen (RD) und
- die aktuelle Fahrzeuglängsgeschwindigkeit nach unten begrenzt wird durch eine durch die minimale Raddrehzahl (RDMIN) vorgegebene Fahrzeuglängsgeschwindigkeit.

7. Verfahren nach einem der vorstehenden Ansprüche, bei dem die aktuelle Fahrzeuglängsgeschwindigkeit durch einen Filter geglättet bereitgestellt wird.

8. Vorrichtung zum Ermitteln einer aktuellen Fahrzeuglängsgeschwindigkeit, die ausgebildet ist
- zum Ermitteln jeweils einer Raddrehzahl (RD) von mindestens zwei Rädern eines Fahrzeugs (1),
- zum Ermitteln jeweils eines gleitenden Variabilitätsmaßes (VAR) für jede Raddrehzahl (RD),
- zum Ermitteln einer aktuellen Zuverlässigkeit der jeweiligen Raddrehzahl (RD) abhängig vom Variabilitätsmaß (VAR) und
- zum Ermitteln der aktuellen Fahrzeuglängsgeschwindigkeit entweder abhängig von den aktuell als zuverlässig erkannten Raddrehzahlen (RD) oder zum Ermitteln der aktuellen Fahrzeuglängsgeschwindigkeit als eine Extrapolation abhängig von zuvor als zuverlässig erkannten Raddrehzahlen (RD), falls aktuell alle Raddrehzahlen (RD) als unzuverlässig erkannt sind, **dadurch gekennzeichnet, dass** die Vorrichtung weiterhin ausgebildet ist
- zum Ermitteln jeweils der Radbeschleunigung (RB) für jede Raddrehzahl (RD),
- zum Erkennen eines Stillstands (SS) des Fahrzeugs (1), wenn alle Radbeschleunigungen (RB) gleich Null sind, und
- für das Ermitteln der aktuellen Fahrzeuglängsgeschwindigkeit bei einem Wechsel von einem erkannten Stillstand (SS) zu einer Bewegung des Fahrzeugs (1) und zum Auswählen derjenigen Raddrehzahl (RD) aus den als aktuell zuverlässig erkannten Raddrehzahlen (RD), die den geringsten Betrag aufweist.

## Claims

1. Method for determining a current longitudinal vehicle speed, in which
- a wheel speed (RD) is determined in each case from at least two wheels of a vehicle (1),
- for each wheel speed (RD) a respective sliding variability measure (VAR) is determined,
- a current reliability of the respective wheel speed (RD) is determined as a function of the variability measure (VAR) and
- the current longitudinal vehicle speed is determined either as a function of the current wheel speeds (RD) recognised as reliable or the current longitudinal vehicle speed as an extrapolation depending on wheel speeds (RD) previously recognised as reliable, if currently all wheel speeds (RD) are recognised as unreliable,
**characterised in that**,
- the wheel acceleration (RB) is determined for each respective wheel speed (RD),
- a stationary state (SS) of the vehicle (1) is recognised, when all wheel accelerations (RB) are equal to zero, and
- for determining the current longitudinal vehicle speed during a switch from a detected stationary state (SS) to a movement of the vehicle (1), for a predetermined period of time that wheel speed (RD) which has the lowest amount is selected from the wheel speeds (RD) currently selected as reliable.

2. Method according to claim 1, in which the variability measure (VAR) is formed by a variance or standard deviation.

3. Method according to one of the preceding claims, in which
- a wheel acceleration (RB) is determined for each respective wheel speed (RD) as a function of the respective wheel speed (RD) and
- the current reliability of the respective wheel speed (RD) is determined as a function of the respective wheel acceleration (RB).

4. Method according to claim 3, in which the respective wheel speed (RD) is currently recognised as reliable, when the measure of variability (VAR) is less than a predetermined variability threshold value (VSW) and the respective wheel acceleration is greater than a predetermined lower wheel acceleration threshold value (USW) and less than a predetermined upper wheel acceleration threshold (OSW).

5. Method according to one of the preceding claims, in which the current longitudinal vehicle speed is determined as a function of the average value of the wheel speeds (RD) currently recognised as reliable and if necessary of selected wheel speeds (RD).

6. Method according to one of the preceding claims, in which
- the wheel acceleration (RB) is determined for each respective wheel speed (RD),
- the stationary state (SS) of the vehicle (1) is recognised when all wheel accelerations (RB) are equal to zero,
- a minimum wheel speed (RDMIN) is determined during a switch from a movement of the vehicle (1) to the stationary state (SS) of the vehicle (1) as a function of the wheel speeds (RD) previously detected as reliable and if necessary selected wheel speeds (RD) and
- the current longitudinal vehicle speed is limited downwards by a predetermined longitudinal vehicle speed predetermined by the minimum wheel speed (RDMIN).

7. Method according to one of the preceding claims, in which the current longitudinal vehicle speed is provided smoothed by a filter.

8. Device for determining a current longitudinal vehicle speed, which is embodied
- for determining a respective wheel speed (RD) of at least two wheels of a vehicle (1),
- for determining a respective sliding measure of variability (VAR) for each wheel speed (RD),
- for determining a current reliability of the respective wheel speed (RD) as a function of the measure of variability (VAR) and
- for determining the current longitudinal vehicle speed either as a function of the wheel speeds (RD) currently recognised as reliable or for determining the current longitudinal vehicle speed as an extrapolation depending O wheel speeds (RD) recognised beforehand as reliable, if currently all wheel speeds (RD) are recognised as unreliable, **characterised in that** the device is further embodied
- to determine the respective wheel acceleration (RB) for each wheel speed (RD),
- to detect a stationary state (SS) of the vehicle (1), if all wheel accelerations (RB) are equal to zero, and
- for determining the current longitudinal vehicle speed during a switch from a recognised stationary state (SS) to a movement of the vehicle (1) and for selecting from the wheel speeds (RD) currently recognised as reliable that wheel speed (RD) which has the lowest amount.

## Revendications

1. Procédé pour déterminer la Vitesse longitudinale actuelle d'un véhicule, dans lequel :
- une vitesse de roue (RD) est respectivement déterminée pour au moins deux roues d'un véhicule (1),
- une mesure de variabilité glissante (VAR) est respectivement déterminée pour chaque vitesse de roue (RD),
- une fiabilité actuelle de chaque vitesse de roue (RD) est déterminée en fonction de la mesure de variabilité (VAR), et
- soit la vitesse longitudinale actuelle du véhicule est déterminée en fonction des vitesses de roue (RD) reconnues actuellement comme fiables, soit la vitesse longitudinale actuelle du véhicule est déterminée comme une extrapolation en fonction de vitesses de roue (RD) préalablement reconnues comme fiables, au cas où toutes les vitesses de roue (RD) sont actuellement reconnues comme non fiables,
**caractérisé en ce que**
- l'accélération de roue (RB) est déterminée respectivement pour chaque vitesse de roue (RD),
- un arrêt (SS) du véhicule (1) est reconnu lorsque toutes les accélérations de roue (RB) sont égales à zéro, et
- pour déterminer la Vitesse longitudinale actuelle du véhicule lors d'un passage d'un arrêt reconnu (SS) à un mouvement du véhicule (1) pendant une durée prédéfinie, est choisie ladite vitesse de roue (RD) qui présente la valeur la plus faible parmi les vitesses de roue (RD) reconnues actuellement comme fiables.

2. Procédé selon la revendication 1, dans lequel la mesure de variabilité (VAR) est formée par une variance ou un écart type.

3. Procédé selon l'une quelconque des revendications précédentes, dans lequel :
- une accélération de roue (RB) est respectivement déterminée pour chaque vitesse de roue (RD) en fonction de la vitesse de roue (RD) respective, et
- la fiabilité actuelle de chaque Vitesse de roue (RD) est déterminée en fonction de l'accélération de roue (RB) respective.

4. Procédé selon la revendication 3, dans lequel la vitesse de roue (RD) respective est actuellement reconnue comme fiable lorsque la mesure de variabilité (VAR) est inférieure à une valeur de seuil de variabilité (VSW) prédéfinie et l'accélération de roue respective est supérieure à une valeur de seuil d'accélération de roue inférieure (USW) prédéfinie et inférieure à une valeur de seuil d'accélération de roue supérieure (OSW) prédéfinie.

5. Procédé selon l'une quelconque des revendications précédentes, dans lequel la Vitesse longitudinale actuelle du véhicule est déterminée en fonction d'une valeur moyenne des vitesses de roue (RD) reconnues actuellement comme fiables et éventuellement choisies.

6. Procédé selon l'une quelconque des revendications précédentes, dans lequel :
- l'accélération de roue (RB) est déterminée respectivement pour chaque vitesse de roue (RD),
- l'arrêt (SS) du véhicule (1) est reconnu lorsque toutes les accélérations de roue (RB) sont égales à zéro,
- une vitesse de roue minimale (RDMIN) est déterminée lors d'un passage d'un mouvement du véhicule (1) à l'arrêt (SS) du véhicule (1) en fonction des vitesses de roue (RD) préalablement reconnues comme fiables et éventuellement choisies, et
- la Vitesse longitudinale actuelle du véhicule est limitée vers le bas par une Vitesse longitudinale du véhicule prédéfinie par la vitesse de roue minimale (RDMIN).

7. Procédé selon l'une quelconque des revendications précédentes, dans lequel la Vitesse longitudinale actuelle du véhicule est mise à disposition lissée par un filtre.

8. Dispositif pour déterminer la vitesse longitudinale actuelle d'un véhicule, qui est réalisé
- pour déterminer respectivement une vitesse de roue (RD) pour au moins deux roues d'un véhicule (1),
- pour déterminer respectivement une mesure de variabilité (VAR) glissante pour chaque vitesse de roue (RD),
- pour déterminer une fiabilité actuelle de chaque vitesse de roue (RD) en fonction de la mesure de variabilité (VAR), et
- pour déterminer la Vitesse longitudinale actuelle du véhicule en fonction des vitesses de roue (RD) reconnues actuellement comme fiables, ou pour déterminer la vitesse longitudinale actuelle du véhicule comme une extrapolation en fonction des vitesses de roue (RD) préalablement reconnues comme fiables, au cas où toutes les vitesses de roue (RD) sont actuellement reconnues comme non fiables, **caractérisé en ce que** le dispositif est en outre réalisé
- pour déterminer respectivement l'accélération de roue (RB) pour chaque vitesse de roue (RD),
- pour reconnaître un arrêt (SS) du véhicule (1) lorsque toutes les accélérations de roue (RB) sont égales à zéro, et
- pour déterminer la vitesse longitudinale actuelle du véhicule lors d'un passage d'un arrêt reconnu (SS) à un mouvement du véhicule (1) et pour choisir la vitesse de roue (RD) qui présente la valeur la plus faible parmi les vitesses de roue (RD) reconnues actuellement comme fiables.
